# EUROPEAN PATENT APPLICATION

(11) **EP 3 296 260 A1**
(43) Date of publication of application: **21.03.2018**
(21) Application number: 16792743.3
(22) Date of filing: 12.05.2016
(51) Int. Cl.: C01B 31/02, B82Y 40/00, H01M 8/18, H01M 4/1393, H01M 4/96

(54) **METHOD FOR MANUFACTURING CARBON NANOTUBE COMPOSITE SHEET**

(30) Priority: 13.05.2015 JP 2015098567
(71) Applicant: Showa Denko K.K., Tokyo 105-8518 (JP)
(72) Inventor: MONDEN Ryuji, Tokyo 105-8518 (JP); HANAWA Kenzo, Tokyo 105-8518 (JP)
(74) Representative: Strehl Schübel-Hopf & Partner
(86) International application number: PCT/JP2016/064130
(87) International publication number: WO 2016/182018

(57) **Abstract**

A device for manufacturing a carbon nanotube composite sheet includes: a dispersion liquid production unit for producing a carbon nanotube dispersion liquid; a coating unit for coating the dispersion liquid; a dehydration unit for dehydrating the coated dispersion liquid; and a finishing unit for cutting a sheet dehydrated in the dehydration unit,
wherein the dispersion liquid production unit includes a mixing tank provided with a wet-type jet mill, the coating unit includes a coating device provided with a base unit and a dispersion liquid supply unit for supplying the dispersion liquid produced by the dispersion liquid production unit to the base unit, and the dehydration unit is provided with a compression unit for compressing a wet carbon nanotube composite sheet obtained in the coating unit, and a dehydration device for dehydrating the compressed wet carbon nanotube composite sheet.

## Description

### [Technical Field]

The present invention relates to a method for producing a carbon nanotube composite sheet. Priority is claimed on Japanese Patent Application No. 2015-98567, filed May 13, 2015, the content of which is incorporated herein by reference.

### [Background Art]

Carbon materials have excellent performance in a number of aspects such as electrical conductivity, thermal conductivity, corrosion resistance, heat resistance, black colorability and chemical stability. Therefore, they are used for various applications. For example, they are used for antistatic materials, electromagnetic shielding materials, battery members, gas diffusers and the like.

Patent Document 1 describes a composite sheet in which carbon nanotubes are coated as a coating film.

### [Citation List]

### [Patent Document]

[Patent Document 1] Japanese Patent No. 5390001

### [Summary of Invention]

### [Technical Problem]

Recently, there is a demand for a method of mass-producing such useful carbon nanotube composite sheets having high electrical conductivity. However, their mass production method has not been specifically disclosed.

The present invention has been made in view of the above problem, and has an object to provide a method of mass-producing a carbon nanotube composite sheet.

### [Solution to Problem]

The present invention includes the following aspects.
[1] A device for manufacturing a carbon nanotube composite sheet, including:
   a dispersion liquid production unit which produces a carbon nanotube dispersion liquid;
   a coating unit which coats the aforementioned dispersion liquid;
   a dehydration unit which dehydrates the coated dispersion liquid; and
   a finishing unit which cuts a dehydrated sheet obtained in the aforementioned dehydration unit,
   wherein the aforementioned dispersion liquid production unit includes a mixing tank provided with a wet-type jet mill,
   the aforementioned coating unit includes a coating device provided with a base unit and a dispersion liquid supply unit which supplies the dispersion liquid produced by the dispersion liquid production unit to the aforementioned base unit, and
   the aforementioned dehydration unit is provided with a compression unit which compresses a wet carbon nanotube composite sheet obtained in the aforementioned coating unit, and a dehydration device which dehydrates the compressed wet carbon nanotube composite sheet.
[2] The device for manufacturing a carbon nanotube composite sheet according to [1], wherein in the aforementioned coating device, the aforementioned base unit is a base sheet extending in one direction, the aforementioned base sheet is transportable in an extending direction, and the aforementioned dispersion liquid is continuously coatable on one surface of the aforementioned base sheet.
[3] The device for manufacturing a carbon nanotube composite sheet according to [2], wherein the aforementioned dispersion liquid supply unit intermittently supplies the aforementioned dispersion liquid, so that a region coated with the dispersion liquid and a region not coated with the dispersion liquid are alternately formed on one surface of the aforementioned base sheet.
[4] A method for manufacturing a carbon nanotube composite sheet, wherein the method uses the device for manufacturing a carbon nanotube composite sheet according to any one of the above [1] to [3].
[5] The method for manufacturing a carbon nanotube composite sheet according to the above [4], including a step of producing a carbon nanotube dispersion liquid, which contains a first carbon nanotube having an average diameter of 100 nm or more and a second carbon nanotube having an average diameter of 30 nm or less, in the dispersion liquid production unit of the aforementioned device for manufacturing a carbon nanotube composite sheet.
[6] The method for manufacturing a carbon nanotube composite sheet according to either [4] or [5], including: coating the dispersion liquid continuously on the aforementioned base unit in the coating unit of the aforementioned device for manufacturing a carbon nanotube composite sheet.
[7] The method for manufacturing a carbon nanotube composite sheet according to any one of [4] to [6], including: forming a region coated with the dispersion liquid and a region not coated with the dispersion liquid alternately on one surface of the aforementioned base unit in the coating unit of the aforementioned device for manufacturing a carbon nanotube composite sheet, and cutting the aforementioned base sheet according to the region not coated with the aforementioned dispersion liquid.

### [Advantageous Effects of Invention]

By using the method for manufacturing a carbon nanotube composite sheet according to one embodiment of the present invention, the carbon nanotube composite sheet can be mass-produced.

### [Brief Description of Drawings]

FIG. 1 is a schematic flow diagram for explaining a manufacturing process according to an embodiment of the present invention.
FIG. 2 is a schematic diagram for explaining a manufacturing device according to an embodiment of the present invention.
FIG. 3 is a schematic perspective view of a coating unit according to one embodiment of the present invention.
FIG. 4 is an enlarged cross-sectional view for explaining a main part of a coating unit according to one embodiment of the present invention.
FIG. 5 is a schematic perspective view of a coating unit according to another embodiment of the present invention.
FIG. 6 is an enlarged cross-sectional view for explaining a main part of a coating unit according to another embodiment of the present invention.
FIG. 7 is a transmission electron micrograph of a carbon nanotube sheet portion of a carbon nanotube composite sheet according to one embodiment of the present invention.
FIG. 8 is a schematic perspective view of an electrode of a redox flow battery according to one embodiment of the present invention.
FIG. 9 is a schematic cross-sectional view for explaining an example of a battery for a redox flow battery according to one embodiment of the present invention.

### [Description of Embodiments]

### (Regarding carbon nanotube composite sheet)

Hereinafter, a carbon nanotube composite sheet (also referred to as "CNT composite sheet") produced by the method for manufacturing a CNT composite sheet according to one embodiment of the present invention will be described.

In the drawings used in the following description, there are cases where characteristic portions are enlarged for the sake of convenience in order to make the features of the present invention easy to understand, and the dimensional ratio of the respective components is different from the actual ratio in some cases. Materials, sizes, and the like exemplified in the following description are merely examples, and the present invention is not limited thereto and can be carried out with appropriate modifications without changing the gist thereof.

A CNT composite sheet manufactured by the method for manufacturing a CNT composite sheet according to one aspect of the present invention is constituted of a base sheet 324, and a carbon nanotube sheet portion (also referred to as "CNT sheet portion") 302 formed on one side surface thereof.

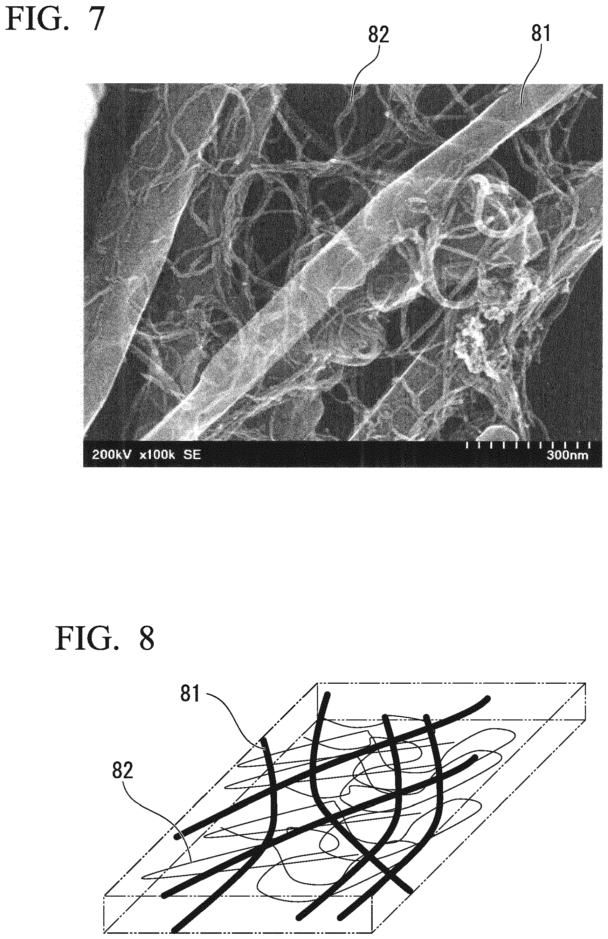

FIG. 7 shows a transmission electron micrograph of the CNT sheet portion 302 of the CNT composite sheet according to one embodiment of the present invention.

The CNT sheet portion includes a first carbon nanotube 81 having an average diameter of 100 nm or more and a second carbon nanotube 82 having an average diameter of 30 nm or less. The second carbon nanotube 82 adheres to the surface of the first carbon nanotube 81. Therefore, the CNT sheet portion has a structure in which the second carbon nanotube 82 straddles between a plurality of first carbon nanotubes 81.

Further, it is preferable that the CNT sheet portion have a structure in which the second carbon nanotube 82 is entangled with the first carbon nanotube 81.

Since the CNT sheet portion has a structure in which the second carbon nanotube 82 straddles between a plurality of first carbon nanotubes 81, the CNT sheet portion can maintain the shape without falling apart during the forming process thereof. Further, when the second carbon nanotube 82 straddles the first carbon nanotube 81, the second carbon nanotube 82 can fill the void between the first carbon nanotubes 81 that are mainly responsible for the electrical conductivity. As a result, the electrical conductivity of the CNT sheet portion can be further enhanced. Increasing the electrical conductivity of the CNT sheet portion means increasing the performance when the CNT sheet portion is used as a member for a battery. In addition, entanglement of the second carbon nanotube 82 with the first carbon nanotube 81 makes it easy for the CNT sheet portion to maintain its shape as an electrode material, and the electrical conductivity of the electrode material is further improved.

Here, for the "straddling structure", for example, when observing the CNT sheet portion with a transmission electron microscope, it is sufficient if the second carbon nanotube can be confirmed to straddle the first carbon nanotube. For example, when 100 arbitrary second carbon nanotubes are observed, it is sufficient if preferably at least 10 and more preferably at least 50 second carbon nanotubes can be confirmed to straddle between the plurality of first carbon nanotubes. It is possible to observe 100 second carbon nanotubes by observing several places. For example, a total of 100 second carbon nanotubes may be observed by observing ten second carbon nanotubes at each of ten locations.

The first carbon nanotube 81 has an average diameter of 100 nm or more, preferably from 100 to 1000 nm, and more preferably from 100 to 300 nm. The second carbon nanotube 82 has an average diameter of 30 nm or less, preferably from 1 to 30 nm, and more preferably from 5 to 20 nm. It is preferable that the fiber lengths of both the first carbon nanotube 81 and the second carbon nanotube 82 be from 1 to 100 µm.

When the sizes of the first carbon nanotube 81 and the second carbon nanotube 82 are in the above ranges, the CNT sheet portion has a structure capable of maintaining high strength and high electrical conductivity. This is because the first carbon nanotube 81 serves as a stem and the second carbon nanotube 82 is suspended in a branch shape between a plurality of first carbon nanotubes 81.

The average diameters of the first carbon nanotube 81 and the second carbon nanotube 82 can be determined respectively, by measuring the diameters of fibers of 100 or more first carbon nanotubes 81 and second carbon nanotubes 82 respectively with an electron microscope, as their arithmetic mean values.

The second carbon nanotube 82 is preferably contained in an amount of 1 to 20 parts by mass, more preferably 4 to 17 parts by mass, and still more preferably 8 to 14 parts by mass, with respect to 100 parts by mass of the first carbon nanotube 81. When the second carbon nanotube 82 is included within this range, the electrical conductivity of the electrode constituted using the CNT sheet portion is improved. It is thought that this is because by including the second carbon nanotube 82 within this range, the first carbon nanotube 81 functions as a main conductor, and the second carbon nanotube 82 electrically connects the respective first carbon nanotubes 81 to efficiently support the conduction.

The CNT sheet portion preferably contains a water-soluble conductive polymer. The water-soluble polymer adsorbs onto the surfaces of the carbon nanotubes (the first carbon nanotube 81 and the second carbon nanotube 82), and renders the surfaces of the carbon nanotubes hydrophilic which are originally water-repellent. In general, the surface of a carbon material can be rendered hydrophilic by introducing an OH group, a COOH group or the like thereinto. However, it is more preferable to include the conductive polymer because the electrical resistance of the electrode obtained by using the CNT composite sheet is lowered. For example, when the CNT composite sheet is used as an electrode material of a redox flow battery, the electrical resistance of the electrode is lowered as the hydrophilicity increases. This is because the electrolyte of the redox flow battery is an aqueous solution, and the electrolyte penetrates into the gaps between the electrodes formed by these carbon nanotubes and causes electrode reactions efficiently.

As the water-soluble conductive polymer, a conductive polymer having a sulfo group is preferable, and polyisothianaphthenesulfonic acid is more preferable. When the water-soluble conductive polymer has a sulfo group, it becomes a self-doping type conductive polymer and can exhibit stable electrical conductivity. Further, since the sulfo group is also a hydrophilic group, it has an advantage of high affinity with the electrolyte. In particular, since the isothianaphthene skeleton includes a benzene ring and has π electrons, and therefore exhibits high affinity with π electrons of the skeleton of the carbon nanotube constituting the electrode, polyisothianaphthenesulfonic acid is more preferable.

It should be noted that when the CNT composite sheet is used for various purposes, in accordance with its purpose of use and ease of use, only the CNT sheet portion removed from the base sheet may be used, or the CNT composite sheet may be used as it is without removing the base sheet.

The base sheet 324 can be variously selected depending on the purpose of use of the CNT composite sheet. Its form is not particularly limited and can be selected according to its purpose of use. For example, a woven fabric formed by weaving a fibrous material into a cloth, and a non-woven fabric formed by adhering or entangling a fibrous material into a cloth by a thermal or chemical action can be mentioned.

The material of the base sheet is not particularly limited and can be selected according to the intended use thereof. For example, natural fibers such as cotton, wool, hemp, pulp and silk, synthetic fibers such as rayon, acrylic fiber, vinylon, aramid fiber, polypropylene, nylon, polyester (AXTER: Toray Industries, Inc.), polyphenylene sulfide (PROCON (registered trademark): Toyobo Co., Ltd.)), polyamide, polyimide and polytetrafluoroethylene, other glass fibers, and the like can be mentioned.

The thickness of the base sheet is not particularly limited and can be selected according to the intended use thereof, and it can be set, for example, from 0.1 to 1 mm. Further, its basis weight is not particularly limited and can be selected according to its material and purpose of use, and it can be set, for example, from 20 g/m² to 800 g/m².

In consideration of a manufacturing process to be described later, it is preferable that the base sheet be capable of permeating a solvent. Since the base sheet can permeate the solvent, the solvent can be easily removed from the dispersion liquid. As the base sheet, for example, a plastic-based film, paper or the like can be appropriately selected.

Further, the base sheet may be selected in consideration of the use mode of the CNT sheet portion. It is preferable to use paper, resin film or the like when a thinner and lighter sheet is required. When nonconductivity is required, it is preferable to use a non-woven fabric constituted of glass fibers (glass paper) or a non-woven fabric constituted of synthetic resin fibers such as aramid, polyester, nylon, vinylon, polyolefin, rayon and the like. In addition, when acid resistance is required, a non-woven fabric using a fluororesin, fluorine-based elastomer, polyester, acrylic resin, polyethylene, polypropylene, polyetheretherketone, polyimide, polyphenylene sulfide or the like is more preferable. When oxidation resistance is required, a non-woven fabric using a fluororesin, fluorine-based elastomer, polyethylene, polyetheretherketone, polyphenylene sulfide or the like is more preferable. When heat resistance is required, a non-woven fabric, flame retardant film, flame retardant paper and the like using a fluororesin, fluorine-based elastomer, polyester, polypropylene, polyarylate, polyetheretherketone, polyimide, polyphenylene sulfide or the like are preferable. When alkali resistance is required, a non-woven fabric constituted of aramid resin fibers is preferable. For example, when used in batteries, acid resistance, oxidation resistance and the like are required, and when used in electromagnetic wave suppressing sheets and heat generating films, heat resistance and the like are particularly required.

At the time of forming the CNT composite sheet, an appropriate structure may be used at the same time in order to facilitate the forming process. For example, when forming the CNT composite sheet, it may be formed preferably with an electrically conductive fiber, and more preferably with a carbon fiber. In addition, together with carbon nanotubes, additives such as catalytic metals and binders may be appropriately used for the forming process.

An example of a manufacturing method and a manufacturing device will be described in accordance with the drawing.

### (Overall process and overall device)

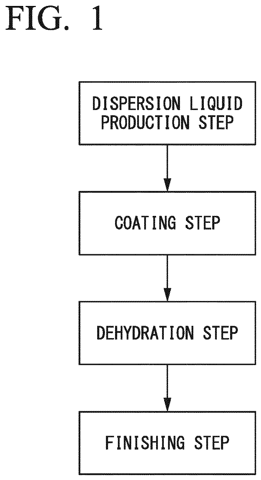

FIG. 1 is an example of a method of manufacturing a CNT composite sheet according to one embodiment of the present invention. In other words, FIG. 1 is a schematic flow diagram of a manufacturing process in order to manufacture a finished CNT composite sheet 66 through a step of obtaining a wet CNT composite sheet 64 by coating a dispersion liquid on a base sheet and a step of obtaining a dehydrated CNT composite sheet 65 from the wet CNT composite sheet. The manufacturing method shown includes a dispersion liquid production step, a coating step and a dehydration step, and includes a finishing step as necessary. In this drawing, the wet CNT composite sheet is a sheet obtained through the coating step, the dehydrated CNT composite sheet is a sheet obtained through the dehydration step, and the finished CNT composite sheet is a sheet obtained through the dehydration step.

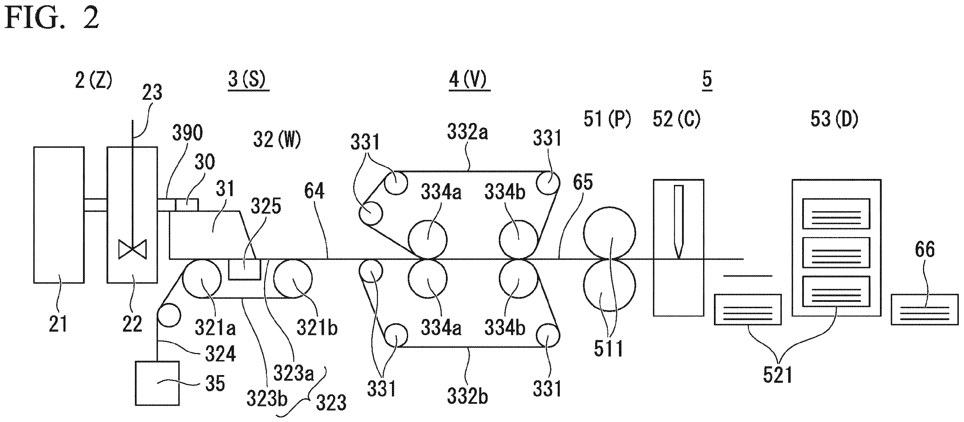

FIG. 2 is a schematic view of an example of a manufacturing device for carrying out the above manufacturing method, which is constituted by a dispersion liquid production unit 2, a coating unit 3, a dehydration unit 4 and a finishing unit 5.

### (Dispersion liquid production unit and dispersion liquid production step)

The dispersion liquid production unit 2 includes at least a mixing tank 21. The mixing tank is equipped with a wet-type jet mill. The wet-type jet mill has a capability of mixing the first carbon nanotubes having an average diameter of 100 nm or more and the second carbon nanotubes having an average diameter of 30 nm or less in a conductive polymer aqueous solution at a pressure of 100 MPa or more.

A preliminary mixer tank (not shown) may be provided prior to the mixing tank for mixing both the first carbon nanotube and the second carbon nanotube with pure water.

A storage tank 22 may be provided between the dispersion liquid production unit 2 and the coating unit 3. If necessary, a stirring device 23 or an excitation device may be provided in the storage tank. This is because the dispersion state can be kept satisfactorily.

By using the above dispersion liquid production device, the dispersion liquid production step can be carried out. The dispersion liquid production step includes (a) a step of charging a first carbon nanotube having an average diameter of 100 nm or more, a second carbon nanotube having an average diameter of 30 nm or less and an aqueous solution of a conductive polymer in a mixing tank, and (b) a step of mixing by a wet-type jet mill.

By using a wet-type jet mill when dispersing the first carbon nanotube and the second carbon nanotube in a solvent, it is possible to disperse the first carbon nanotube and the second carbon nanotube in a solvent while suppressing damages particularly to the first carbon nanotube. The pressure at the time of mixing is preferably 100 MPa or more and more preferably from 150 to 250 MPa. If the pressure is within this range, it is possible to disperse the first carbon nanotube and the second carbon nanotube while suppressing the damage to the first carbon nanotube more remarkably.

When an aqueous conductive polymer solution is used, carbon nanotubes are easily dispersed by mixing with a wet-type jet mill. Although details are unknown, because the conductive polymer remains on the surface of the CNT sheet portion obtained by using the aqueous conductive polymer solution, the surface of the electrode constituted of the CNT sheet portion tends to become hydrophilic.

The concentration of the aqueous conductive polymer solution may be appropriately determined in consideration of the following. The conductive polymer may be added in an amount sufficient for hydrophilizing the carbon nanotubes and improving the dispersibility.

The amount of the aqueous conductive polymer solution to be added can be confirmed by a preliminary experiment. For example, the amount necessary for hydrophilization is an amount that does not cause a significant decrease in the concentration of the conductive polymer even when carbon nanotubes are added into the aqueous conductive polymer solution. Further, the amount necessary for improving the dispersibility is, for example, an amount where the surface roughness of the CNT sheet portion that is measured, during preparation of an electrode by a method described later so as to have a thickness of 200 µm, becomes equal to or less than 1/5, and more preferably equal to or less than 1/10, of the arithmetic average roughness Ra when a conductive polymer is not added.

In particular, polyisothianaphthenesulfonic acid has a remarkable effect on hydrophilization and improvement in dispersibility, and the amount thereof to be added may be extremely small. Therefore, in the case of polyisothianaphthenesulfonic acid, carbon nanotubes can be sufficiently dispersed if 3 times the amount necessary for hydrophilization is added.

For molding the CNT sheet portion, a suitable structure may be used together in order to facilitate the molding. For example, when electrical conductivity is required for the CNT sheet portion in producing the dispersion liquid, it is preferable to add it together with a conductive fiber, more preferably a carbon fiber. In addition, additives such as a catalytic metal and a binder may appropriately be added together. When the particle size of these additives is large, it is preferable to add them after mixing with a wet-type jet mill.

As the conductive polymer in the aqueous conductive polymer solution, a conductive polymer having a sulfo group is preferable, a conductive polymer further containing a thiophene skeleton in a repeating unit is more preferable, a conductive polymer further containing isothianaphthenesulfonic acid is still more preferable, and polyisothianaphthenesulfonic acid is still more preferable.

### (Coating unit and coating step)

The coating unit 3 is for coating the dispersion liquid 301 produced by the dispersion liquid production unit 2 onto the base sheet 324, and constituted of a coating device S having at least a dispersion liquid supply unit 30 for uniformly supplying a certain amount of the dispersion liquid, a head box 31, and a punch sheet unit 32. The dispersion liquid transfer means 390 transfers the dispersion liquid from the dispersion liquid production unit 2 to the dispersion liquid supply unit 30. Examples of the dispersion liquid transfer means include a continuous transfer device using a transport pipe, a batch transfer device by pumping, and the like.

As shown in FIG. 2, the punch sheet unit 32 is constituted of a punch sheet device W having a punch sheet 323 and a rotating roller 321 for driving the punch sheet. The punch sheet 323 is stretched over a plurality of rotating rollers (two of which are shown as 321a and 321b in FIG. 2) that are rotated by a driving device of a drive motor and a drive control device (not shown). Further, the punch sheet 323 is formed in a mesh shape, and forms an endless track composed of an outward track 323a and a return track 323b. In the upstream rotating roller 321a, the long base sheet 324 supplied from a base sheet feeder 35 is drawn onto the punch sheet 323 and sent to the punch sheet unit 32 together with the punch sheet 323. When the dispersion liquid is coated onto the base sheet, since the dispersion medium of the dispersion liquid may drop from the base sheet, the punch sheet unit 32 may further include a recovery unit (not shown) for recovering the dispersion medium. Although the punch sheet 323 is driven by the rotating roller 321, its traveling speed can be controlled to a predetermined speed in accordance with the coating conditions. For example, it is possible to move at a constant speed in a state where a certain amount of dispersion liquid is supplied in order to obtain a coating film of uniform thickness.

The punch sheet 323 may be formed in a mesh shape to form an endless track, and examples thereof include a metal foil subjected to a punching treatment, a metal wire formed into a net shape, a plastic processed into a nonwoven fabric, or the like.

The material can be selected appropriately from waterproof materials, metals (aluminum, stainless steel, or the like), plastics (polyethylene, polypropylene, or the like), materials having organic solvent resistance when the dispersion liquid is an organic solvent type, and the like.

In addition, its strength and flexibility can be determined from the material and thickness so as to be suitable for the purpose of use at the punch sheet unit. For example, the thickness can be from about 10 µm to about 5 mm.

The overall length of the punch sheet 323 (the distance between the leading end and the trailing end of the plurality of rotating rollers) is not particularly limited and can be appropriately selected in consideration of the water absorption state of the wet CNT composite sheet, the transportation stability, and the productivity. It is preferable that its width be wider than the width of the base sheet 324.

The travelling speed of the base sheet 324 can be adjusted to a predetermined speed so as to obtain an optimum coating state. The travelling speed of the punch sheet 323 can be adjusted so that the base sheet can be fed so as to obtain an optimum coating state. The travelling speed of the punch sheet 323 is preferably equal to or higher than the running speed of the base sheet 324. This is because the base sheet 324 slides on the punch sheet 323, so that the running of the base sheet 324 is stabilized.

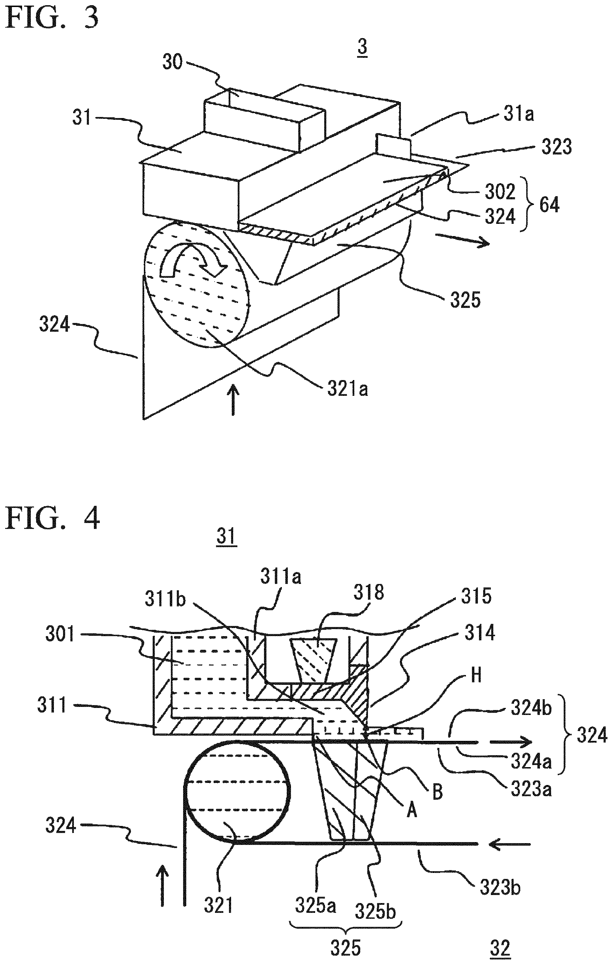

A common device can be used as a coating device. More specifically, various coaters such as a slit die coater and a lip coater can be used. FIG. 3 shows an example of a coating device. FIG. 3 is a schematic perspective view of the head box 31 and the punch sheet unit 32 constituting the coating unit 3. FIG. 4 is an enlarged cross-sectional view for explaining a main part of the head box 31 and the punch sheet unit 32 shown in FIG. 3.

The head box 31 is for uniformly supplying the dispersion liquid 301 supplied from the dispersion liquid supply unit 30 to the punch sheet unit 32. As shown in FIG. 4, the head box 31 includes a head box main body 311 for introducing the dispersion liquid 301. The head box main body 311 is provided with an open-to-air storage unit 311 a for storing the dispersion liquid and a supply unit 311b at the lower part of the storage unit 311a for supplying a dispersion liquid 301 in the storage unit 311a by free fall to the upper surface side of the base sheet 324 placed on the punch sheet 323. In addition, as another method for uniformly supplying the dispersion liquid, the dispersion liquid may be supplied by using a metering liquid feeding pump.

Although the storage unit 311a for storing the dispersion liquid has been described as an open-to-atmosphere type, it is also possible to configure the storage unit 311a as a closed type so that the stored dispersion liquid is pressurized with air, an inert gas or the like and the dispersion liquid is sent to the supply unit 311b. If it is configured as a closed type, it is preferable because the amount of the dispersion liquid supplied to the supply unit 311b can be adjusted by the applied pressure.

The supply unit 311b is opened along the feed direction of the base sheet 324 in the range from the supply start point A on the upstream side to the supply end point B on the downstream side. At the position of the supply end point B, a slit portion 314 arranged in the head box main body 311 so as to minimize the flow cross-sectional area of the dispersion liquid is provided.

The slit portion 314 is provided in order to limit the excessive outflow of the dispersion liquid onto the base sheet 324, and adjustment of the thickness of the CNT sheet portion and the like obtained after the coating of the dispersion liquid is carried out by the distance (H) between the slit portion 314 and the base sheet 324. For example, by experimentally determining in advance the relationship between the amount of dispersion liquid (amount per unit time) to be supplied, which is changed by changing the distance (H) by moving the position of the slit portion 314 upward and downward, the moving speed and thickness of the base sheet 324, and by setting the distance (H) and the moving speed of the base sheet so that a predetermined thickness can be obtained, adjustment of the thickness of the CNT sheet portion and the like can be realized.

Walls extending a predetermined length along both side edge portions of the punch sheet 323 of the punch sheet unit 32 are formed on the right and left sides of the supply unit 311b to constitute a guide member 31a. The guide member 31a is configured so as to prevent the dispersion liquid 301 supplied from the head box 31 onto the base sheet 324 from flowing down outward from the side edge of the base sheet 324.

A suction portion 325 is provided below the outward track 323a. The suction port of the suction portion 325 is opened in a range including the supply end point position B which is the most downstream side of the supply unit 311b. The suction portion 325 is connected to a vacuum pump (not shown) and a pressure regulator (not shown), so that a predetermined negative pressure is applied to the suction port. Further, the dispersion liquid coated on the outward track 323a, the base sheet 324 and the base sheet, moves from the upstream side to the downstream side above the suction port.

At this time, moisture of the base sheet 324 and the coated dispersion liquid (that is, a portion planned to become the CNT sheet portion) can be sucked through the punch sheet 323 of the outward track 323a by the suction portion 325.

The suction portion 325 may be configured so as to be divided into an opening portion 325a on the upstream side of the supply end point position B and an opening portion 325b on the downstream side to apply different negative pressures to each of them.

It is preferable to add to the head box 31 a function of supplying the dispersion liquid while uniformly spreading it in the width direction of the base sheet.

For example, as shown in FIG. 4, a vibration exciter 318 may be disposed in the head box 31. The structure and arrangement position of the vibration exciter 318 is not particularly limited as long as it can vibrate at least the supply unit 311b or the vicinity thereof.

The vibration exciter 318 is configured so as to press a transverse wall member 315 constituting the position in the vicinity of the upstream side of the slit 314 by vibrations, so that the supply channel of the dispersion liquid can be compressed. The vibration exciter 318 can push out the dispersion liquid supplied from the slit 314 to the punch sheet unit 32 while uniformly spreading the dispersion liquid in the width direction of the base sheet.

Further, the vibration exciter 318 is configured so as to press the transverse wall member 315 constituting the position in the vicinity of the upstream side of the slit 314 by vibrations, so that the supply channel of the dispersion liquid can be compressed, and can also be configured so as to forcibly push out the dispersion liquid clogged in the slit 314 to the downstream side.

Furthermore, by adopting a structure in which the vibration is transmitted to the transverse wall member 31a, it is also possible to configure so that the vibration of the vibration exciter 318 is transmitted to the punch sheet 323 to vibrate the punch sheet 323 in the vertical direction. This configuration is preferable because the coated dispersion liquid can be uniformly spread in the width direction of the base sheet and the dehydrating action from the dispersion liquid can be promoted.

When coating the dispersion liquid, it is also possible to discretely form the CNT sheet portion on the base sheet by intermittently supplying the dispersion liquid. When cutting into a single leaf form in a finishing step of a subsequent process, since the cut portion can be made as a portion composed only of the base sheet which is not coated with the dispersion liquid, cutting is facilitated. For example, when the storage unit 311a is being pressurized, supply of the dispersion liquid can be stopped by temporarily creating negative pressure. Further, in the case where the dispersion liquid is supplied by a liquid feeding pump, the supply of the dispersion liquid can be stopped by temporarily stopping the liquid delivery by the liquid feeding pump. While the supply of the dispersion liquid is stopped, a portion composed only of the base sheet which is not coated with the dispersion liquid is formed.

By using the above device, it is possible to coat a dispersion liquid containing carbon nanotubes to one side surface of the base sheet, while including a step of removing moisture of the dispersion liquid from the other side surface of the base sheet.

By using the above device, the dispersion liquid can be coated on one side surface 324b of the base sheet. At this time, as described above, it is preferable to coat the dispersion liquid onto the other surface 324b of the base sheet while absorbing water from the other surface 324a of the base sheet. According to this method, the dispersion liquid is coated while being gradually fixed onto the base sheet by water absorption.

The dispersion liquid supplied from the head box 31 is coated with a predetermined film thickness on one side surface 324b of the moving head box 31 side, whereby a coating film (a portion planned to become the CNT sheet portion) is formed on the base sheet 324. Further, as the base sheet passes over the opening portion of the suction portion, moisture of the coating film is sucked from the other side surface 324a facing the opening portion, whereby a wet CNT composite sheet can be obtained.

Since the coating film is continuously formed on the base sheet by continuously operating this device, the wet CNT composite sheet can be mass-produced.

In the case where the suction port is opened within a range including the range of the supply end point B on the downstream side, and particularly when the range includes the upstream side, the formation of the coating film is started from the upstream side of the supply end point B, and a stable coating film can be produced.

### (Dehydration unit and dehydration step)

A dehydration unit 4 is provided with a dehydration device (V) constituted of at least a compression unit and a dehydrating sheet.

An example of a dehydration device (V) in which the compression unit is constituted of a squeeze roller and the dehydrating sheet is constituted of a dehydrating belt is shown in FIG. 2. The dehydration device (V) has a pair of endless dehydrating belts 332a and 332b, on the upper and lower sides, each bridging between a plurality of rotating rollers 331, and has a structure in which the upper dehydrating belt 332a and the lower dehydrating belt 332b are partially abutted with each other. A pair of squeeze rollers 334 for compressing and squeezing both the dehydrating belts 332a and 332b is provided at a portion where the upper dehydrating belt 332a and the lower dehydrating belt 332b are partially abutted with each other.

The wet CNT composite sheet 64 is fed from the upstream side to between both the dehydrating belts 332a and 332b by a pair of squeeze rollers 334, and the fed wet CNT composite sheet 64 is sent to the downstream side while being compressed. Meanwhile, the wet CNT composite sheet 64 is dehydrated by contacting the dehydrating belts 332a and 332b.

It should be noted that the relationship between the installation positions of the upper dehydrating belt 332a and the lower dehydrating belt 332b may be the same position, or the upper dehydrating belt 332a may be arranged in the traveling direction of the wet CNT composite sheet 64 on the upstream side than the lower dehydrating belt 332b, or may be vice versa. The relationship of installation positions can be selected in accordance with the conditions of the coated surface and the base sheet surface.

It is preferable that either the upper dehydrating belt 332a or the lower dehydrating belt 332b first contacts the wet CNT composite sheet 64. This is because the dehydration step is stabilized. For example, by disposing the upper dehydrating belt 332a in the traveling direction of the wet composite CNT sheet 64 on the upstream side than the lower dehydrating belt 332b, it is possible to first bring the coated surface of the conveyed wet CNT composite sheet 64 into contact with the upper dehydrating belt 332a to start dehydration and then bring the base sheet 324 of the wet CNT composite sheet 64 into contact with the lower dehydrating belt 332b at the time of squeezing by the squeeze roller 334.

Conversely, by disposing the upper dehydrating belt 332a in the traveling direction of the wet composite CNT sheet 64 on the downstream side than the lower dehydrating belt 332b, it is possible to first bring the base sheet 324 of the conveyed wet CNT composite sheet 64 into contact with the lower dehydrating belt 332b to hold and then bring the coated surface of the wet CNT composite sheet 64 into contact with the upper dehydrating belt 332a at the time of squeezing by the squeeze roller 334.

A plurality of squeeze rollers 334 can be provided. In that case, it is preferable that the squeeze roller 334a on the upstream side has a lower pressing force than the squeeze roller 334b on the downstream side. At the time of squeezing by the squeeze roller 334a on the upstream side, the water content of the wet CNT composite sheet 64 is higher than that at the time of squeezing by the squeeze roller 334b on the downstream side. By squeezing the squeeze roller 334a on the upstream side with a weaker force than the squeeze roller 334b on the downstream side, it is possible to prevent the CNT component in the wet CNT composite sheet 64 from flowing back to the upstream side of the squeeze roller 334a on the lower dehydrating belt 332b by the moisture generated by squeezing. By preventing the back flow of the CNT component, it is possible to suppress the occurrence of a problem that a uniform CNT sheet portion cannot be formed. Further, by first squeezing with a comparatively weak pressing force by the squeeze roller 334a on the upstream side and reducing the amount of moisture contained in the wet CNT composite sheet 64, and then squeezing with a stronger pressing force than that of the squeeze roller 334a on the upstream side by the squeeze roller 334b on the downstream side, the strength of the finally obtained CNT composite sheet 7 can be improved.

In the dehydration step, a hot air drying unit may be added as appropriate. For example, it is possible to provide a hot air drying device after the squeeze roller 334b on the downstream side.

Note that a part of the rotating roller 331 can also be of a heating type. By bringing it into contact with the heated portion, it is possible to dry the dehydrating belt which has absorbed the moisture contained in the wet CNT composite sheet 64.

It should be noted that although an example in which a pair of squeeze rollers 334 are disposed was used for the description, when dehydration is easy, a configuration in which no squeeze roller is disposed or a configuration in which a dehydrating belt is disposed only on one side may be adopted.

A dehydrated CNT composite sheet 65 can be obtained by subjecting the wet CNT composite sheet 64 to a dehydration step using the dehydration device as described above.

### (Finishing unit and finishing step)

As shown in FIG. 2, a finishing unit 5 is constituted of a finishing device for obtaining a finished CNT composite sheet 66 from the dehydrated CNT composite sheet 65. The finishing device has a pressing unit 51, a cutting unit 52, and a drying unit 53 as needed, and its combination and its order can be selected appropriately if necessary. For example, in the case of reusing the base sheet, it is preferable to arrange the pressing unit, the drying unit and the cutting unit in this order. Particularly when the CNT sheet portion can be easily removed from the base sheet by drying, it is possible to remove the CNT sheet portion by winding only the base sheet after drying. In addition, in the case where the CNT sheet portion becomes very hard after drying and there is a possibility that defects such as cracking may occur at the time of cutting, it is preferable to dry after cutting. When it takes time to dry, it is preferable to arrange the pressing unit, the cutting unit and the drying unit in this order, and to dry the cut CNT composite sheet for a required time.

FIG. 2 shows an example in which the pressing unit 51, the cutting unit 52 and the drying unit 53 are arranged in this order in order to obtain a finished CNT composite sheet 66 in a single leaf form in the order of a standard finishing step. The pressing unit 51 is provided with a pressing device (P) for increasing the flatness of the dehydrated CNT composite sheet. There are no particular limitations on the pressing method, although a pressing method using a pressing roller 511 or a pressing method using a flat plate can be mentioned. The cutting unit 52 is provided with a cutting device (C) for cutting the dehydrated CNT composite sheet to a predetermined sheet size. The cutting method is not particularly limited, although a cutting method using a cutting blade (not shown) can be mentioned. It may be cut at a stroke by moving the cutting blade up and down or may be cut while scanning with a rotary blade. In the case where the CNT sheet is brittle, it is preferable to use a method of gradually cutting a portion which is in contact with the blade by inclining the blade part of the cutting blade, or to use a rotary blade.

The drying unit 53 is provided with a drying device (D) for sufficiently drying the dehydrated CNT composite sheet. There are no particular limitations on the drying method, although, for example, it is possible to appropriately select a batch type or a flow type for the processing method, and a hot air type, a heater type or an infrared type for the heating method.

In FIG. 2, an example is shown in which the CNT composite sheet cut by the cutting unit 52 is received in a conveyance tray 521, and the conveyance tray 521 is introduced into a batch-type drying unit 53.

It should be noted that it is also possible to perform a finishing step after removing the CNT sheet portion from the base sheet. For example, by inserting a plate-shaped jig between the CNT sheet portion and the base sheet of the dehydrated CNT composite sheet, the CNT sheet portion can be easily removed from the base sheet. At this time, the dehydrated CNT composite sheet may be moved or the jig may be moved, but it is preferable that the base sheet is kept horizontal. Furthermore, when the dehydrated CNT composite sheet is long, it is preferable to carry out the removal operation while winding the remaining base sheet. Further, it is also possible to remove the CNT sheet portion by applying an air current between the CNT sheet portion and the base sheet.

The finished CNT composite sheet 66 can be obtained by subjecting the dehydrated CNT composite sheet 65 to a finishing step using the finishing device as described above.

It should be noted that in this production method, after the dehydration step, a step of winding up into a roll may be added to provide an intermediate storage step. In that case, it is preferable to keep the wound roll body while maintaining a predetermined water retention state. Further, when rewinding it, it is preferable to humidify and rewind appropriately. This is because winding and rewinding become difficult when it is dried too much.

It should be noted that although an example where the suction port of the suction portion 325 is opened in the range including the supply end point position B which is the most downstream side of the supply unit 311b in the coating step was used for the description, it is also possible to adopt a configuration in which the suction port of the suction portion 325 is opened on the downstream side of the supply end point position B of the supply unit 311b in accordance with the state of the concentration of the dispersion liquid and the viscosity of the dispersion liquid.

As a result, it is possible to coat a dispersion liquid containing carbon nanotubes to one side surface of the base sheet while including a step of removing moisture of the dispersion liquid from the other side surface of the base sheet. In this case, the dispersion liquid moves on the suction port from the upstream side to the downstream side after being coated on the base sheet 324 with a film thickness adjusted by the slit 314. A coating film (a portion planned to become the CNT sheet portion) is formed by coating the dispersion liquid supplied from the head box 31 with a predetermined film thickness on one side surface 324b of the moving base sheet 324 on the head box 31 side. On the other hand, moisture of the coating film is sucked from the other side surface 324a facing the opening portion as the base sheet passes over the opening portion of the suction portion, whereby a wet CNT composite sheet can be obtained.

By continuously operating this device, a coating film is continuously formed on the base sheet, and the wet CNT composite sheet can be mass-produced.

Furthermore, by selecting the base sheet in accordance with the state of the concentration of the dispersion liquid and the viscosity of the dispersion liquid, it is also possible to adopt a configuration in which the suction portion 325 is not provided. In this case, while the dispersion liquid moves until the dehydration step of the next step from the upstream side to the downstream side after being coated on the base sheet 324 with a film thickness adjusted by the slit 314, moisture of the coated dispersion liquid will be caused to penetrate downward from the base sheet by gravity and diffusion.

As a result, it is possible to coat a dispersion liquid containing carbon nanotubes to one side surface of the base sheet while including a step of removing moisture of the dispersion liquid from the other side surface of the base sheet. A coating film (a portion planned to become the CNT sheet portion) is formed by coating the dispersion liquid supplied from the head box 31 with a predetermined film thickness onto one side surface 324b of the moving base sheet 324 on the head box 31 side, and moisture of the coating film is removed from the other side surface 324a, whereby a wet CNT composite sheet is obtained. By continuously operating this device, a coating film is continuously formed on the base sheet, and the wet CNT composite sheet can be mass-produced.

### (Another example of embodiment of coating step)

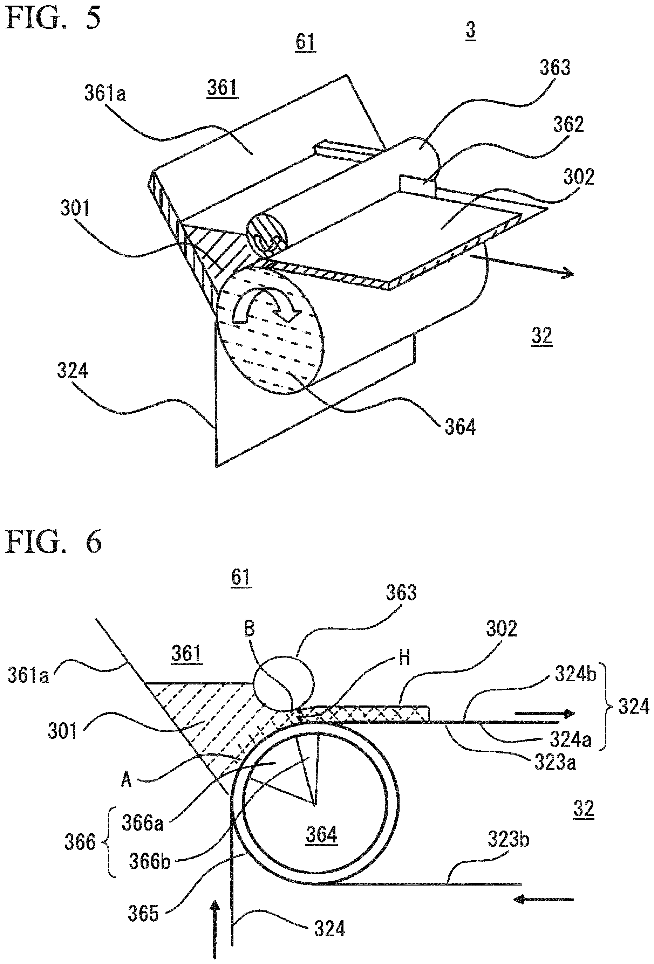

Another example of the coating device provided in the coating unit is shown in FIGS. 5 and 6. In the coating device of another example, the punch sheet unit, the punch sheet, the base sheet feeder, the guide member and the vibration exciter shown in FIGS. 3 and 4 are equally formed, although the head box unit, the suction portion and the rotating roller on the upstream side have different configurations.

FIG. 5 is a schematic perspective view of a head box 61 and the punch sheet unit 32 constituting the coating unit 3. FIG. 6 is an enlarged cross-sectional view for explaining the main parts of the head box 61 and the punch sheet unit 32 shown in FIG. 5.

The head box 61 is for uniformly supplying the dispersion liquid 301 supplied from the dispersion liquid supply unit 30 to the punch sheet unit 32. As shown in FIG. 6, the head box 61 includes a head box main body 361 for introducing the dispersion liquid 301, a drive roll 364 and a coater bar 363. In the drive roll 364, the roll itself has a double tube structure composed of an outer shell and an inner shell, and is disposed in contact with a head box bottom wall 361a at the bottom of the head box main body. A part of the outer shell constitutes a part of the head box main body, and the outer shell 365 is punched around its entire circumference. The drive roll 364 is rotated by a driving device (not shown), the inner shell does not rotate, and the suction portion 366 is opened facing the inner wall of the outer shell.

The drive roll 364 also serves as a rotating roller on the upstream side of the punch sheet unit. The drive roll 364 bridges and stretches the punch sheet 323. At the same time the drive roll 364 feeds the long base sheet 324 supplied from the base sheet feeder 35 in the drive roll 364 to the punch sheet unit 32. At this time, the base sheet 324 is wound onto the punch sheet 323.

The coater bar 363 is disposed above the drive roll 364. The outer peripheral portion of the coater bar constitutes a part of the head box main body and has a gap (H) formed with the drive roll 364. The end position of the gap on the coater bar 363 side corresponds to the supply end point portion (B).

It is sufficient that the coater bar 363 can form the gap (H), and a columnar shape or a knife shape can be used. Further, the coater bar 363 may be rotated, oscillated or the like by a driving device (not shown).

The dispersion liquid stored in the head box main body 361 is extruded from the gap provided between the coater bar 363 and the drive roll 364 by the hydrostatic pressure of the reservoir portion and coated with a predetermined thickness on the long base sheet fed together with the punch sheet to form a wet CNT composite sheet 64.

The opening portion of the suction portion 366 of the drive roll 364 is opened in a range including the supply end point portion (B). The suction portion 366 is connected to a vacuum pump (not shown) and a pressure regulator (not shown), so that a predetermined negative pressure is applied to the suction port. Moisture can be sucked from the base sheet 324 and the coated dispersion liquid (that is, a portion planned to become the CNT sheet portion) through the punch sheet 323 of the outward track 323a and the outer shell of the drive roll 364. Here, it is preferable that the perforation ratio of punching of the outer shell of the drive roll 364 is a perforation ratio that can obtain a sufficient suction effect for sucking moisture.

The suction portion 366 may be configured so as to be divided into an opening portion 366a on the upstream side of the gap position B and an opening portion 366b on the downstream side to apply different negative pressures to each of them.

Here, the opening portion is opened in a range including the supply end point portion B, and in particular opens from the position A in the reservoir portion. Therefore, on the base sheet to be lifted from the position A, the dispersion liquid is sucked by the suction opening, and the dispersion liquid is dehydrated. As a result, the CNT sheet portion is fixed onto the base sheet. The CNT sheet portion fixed on the base sheet is pulled up as it is by the drive roll and moves to the gap portion B while increasing the thickness of the CNT sheet portion. Further, the thickness of the wet CNT composite sheet 64 is adjusted to a predetermined thickness in the gap of the coater bar. It should be noted that suction may be carried out even at a position after the coater bar gap where the supply of the dispersion liquid is finished. The wet CNT composite sheet 64 is sent as it is to the next dehydration step together with the base sheet.

By using the device described above, when pulling up the base sheet from the dispersion liquid by the drive roll, it becomes possible to raise the carbon nanotubes in the dispersion liquid while fixing them onto the opposite side surface of the base sheet by applying suction from the side surface of the drive roll of the base sheet. The dispersion liquid supplied from the head box 61 onto the punch sheet 323 is coated onto the base sheet 324 moving on the punch sheet with a certain film thickness, so that a coating film (a portion planned to become the CNT sheet portion) is formed, and the base sheet passes over the opening portion of the suction portion, whereby moisture is sucked from the coating film and the wet CNT composite sheet 64 is obtained.

As a result, it is possible to coat a dispersion liquid containing carbon nanotubes onto one side surface of the base sheet while including a step of removing moisture of the dispersion liquid from the other side surface of the base sheet. By continuously operating this device, a coating film is continuously formed on the base sheet. In the case where the suction port is opened within a range including the range of the supply end point B on the downstream side, particularly when the range includes the upstream side, the formation of the coating film is started from the upstream side of the supply end point B, and therefore a stable coated film can be produced.

Furthermore, in the device shown in FIGS. 2, 3, 4, 5 and 6, by selecting and using the base sheet 324 having sufficiently high rigidity and the ability to permeate only the dispersion medium of the dispersion liquid, it is also possible to adopt a configuration without using a punch sheet. For example, it can be realized by adopting a configuration in which the long base sheet 324 to be supplied is directly wound by the rotating roller on the upstream side of the punch sheet portion and conveying the rotating roller on the downstream side while applying tension to the base sheet. A coating film (a portion planned to become the CNT sheet portion) is formed by coating the dispersion liquid supplied from the head box 31 with a predetermined film thickness onto one side surface 324b of the moving base sheet 324 on the head box 31 side, and moisture of the coating film is removed from the other side surface 324a, whereby a wet CNT composite sheet can be obtained.

It should be noted that although the CNT composite sheet is conveyed between the respective devices in the integrated manufacturing apparatus shown in FIG. 2, it is preferable to dispose each device in the steps after the dispersion liquid is being coated on the base sheet so as not to impart deformation such as sudden bending to the CNT composite sheet. This is because the occurrence of wrinkles, distortions, cracks and the like in the coated CNT sheet portion can be suppressed.

Furthermore, although an apparatus for continuously and integrally manufacturing a long base sheet by sequential and continuous conveyance has been described as an example, it is also possible to adopt a device configuration in which each step is carried out without conveying the base sheet using a base sheet in a single leaf form.

For example, in a coating device, it is possible to adopt a configuration in which, instead of transporting a long base sheet, a dispersion liquid is coated from a head box onto one side surface of a base sheet prepared in a single leaf form with no movement, and moisture is removed from the other side surface of the base sheet. For example, in a dehydration device, instead of using a squeeze roller, it is possible to adopt a configuration in which a wet CNT composite sheet in a single leaf form is squeezed, without being transported, by a pressing device while being sandwiched between dehydrating sheets.

### (Recycling step)

It is possible to provide a recycling step in which the dispersion liquid and the CNT composite sheet that did not reach the state of the finished CNT composite sheet in the manufacturing process according to one embodiment of the present invention are recovered and reintroduced into the dispersion liquid production step. For the reintroduction operation, they are reintroduced into the mixing tank 21 and/or the preliminary mixer tank of the dispersion liquid production unit 2. The recovered CNT composite sheet is reintroduced in a state of the CNT sheet portion by removing the base sheet. Further, it is preferable to introduce it, after preliminary cutting and crushing, before feeding it into the mixing tank 21 and/or a preliminary mixer tank.

The dispersion liquid and the CNT composite sheet that did not reach the state of the finished CNT composite sheet in the manufacturing process according to one embodiment of the present invention correspond to a dispersion liquid in a predetermined state and a CNT composite sheet including a CNT sheet portion having a predetermined structure. Therefore, a finished CNT composite sheet can be produced also by the reintroduction operation. It should be noted that in addition to the dispersion liquid and the CNT composite sheet that did not reach the state of the finished CNT composite sheet, the CNT sheet portion recovered as a used product can also be reintroduced in the same manner.

### [Examples]

The present invention will be described more specifically below with reference to examples of the present invention. These are merely examples for explanation, and the present invention is in no way limited by them.

FIG. 8 is a schematic perspective view of an electrode of a redox flow battery according to an example. As shown in FIG. 8, an electrode 810 of a redox flow battery uses a CNT sheet portion obtained by the method for manufacturing a CNT composite sheet according to one aspect of the present invention as an electrode material. That is, the electrode 810 of the redox flow battery includes a first carbon nanotube 81 and a second carbon nanotube 82. Although the shape of the electrode of the redox flow battery is not particularly limited, it is possible to incorporate those obtained by processing the CNT sheet portion into an appropriate size and shape while being fixed to the base sheet or those obtained by processing the CNT sheet portion removed from the base sheet into an appropriate size and shape.

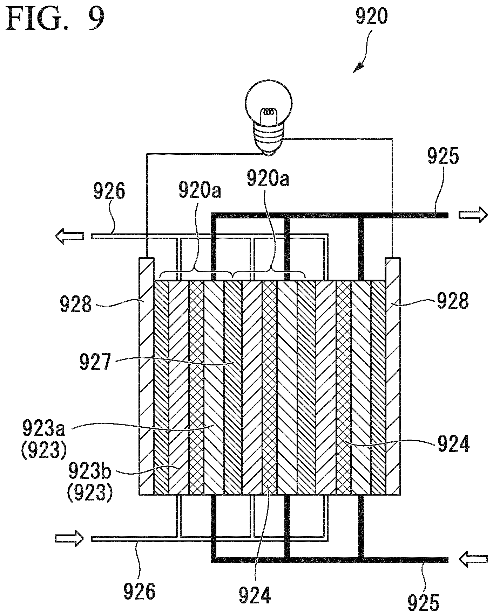

FIG. 9 is a schematic cross-sectional view for explaining a redox flow battery according to an example. The electrode manufactured by the above procedure can be incorporated into the redox flow battery shown in FIG. 9 by a conventional method. As a method of operating the battery, it is sufficient to follow a general method of operating a redox flow battery.

A redox flow battery 920 shown in FIG. 9 includes a plurality of cells 920a between current collecting plates 928 and 928. In each cell 920a, electrodes 923 and bipolar plates 927 are disposed on both sides of the diaphragm 924, respectively. The bipolar plate 927 is shared by the two cells 920a arranged adjacent to each other.

In each cell 920a, a positive electrode 923a and a negative electrode 923b are provided as the electrodes 923. The positive electrode 923a of each cell 920a is disposed so as to face the negative electrode 923b of the adjacent cell 920a via the diaphragm 924. The electrode of the redox flow battery described above can be used as the positive electrode 923a or the negative electrode 923b. A positive electrode electrolyte is supplied into the positive electrode 923a via a positive electrode pipe 925 and a negative electrode electrolyte is supplied into the negative electrode 923b via a negative electrode pipe 926.

### Example 1:

By using the device shown in FIG. 2, the carbon nanotube composite sheet was mass-produced.

900 g of VGCF (registered trademark) -H (average diameter: 150 nm, average fiber length: 10 µm) manufactured by Showa Denko K.K. was used as the first carbon nanotube, and 100 g of VGCF (registered trademark) -X (average diameter: 15 nm, average fiber length: 3 µm) manufactured by Showa Denko K.K. was used as the second carbon nanotube. These were placed in a solution prepared by dissolving 0.5 g of polyisothianaphthenesulfonic acid in 50 liters of pure water, and preliminarily mixed using a mixer tank (equivalent to ULTRA-TURRAX UTC 80 manufactured by IKA Works, Inc.).

The obtained mixture was placed in a mixing tank 21 and mixed. A wet-type jet mill (equivalent to StarBurst HJP-25005 manufactured by Sugino Machine Ltd.) was provided in the mixing tank 21, and the mixture was treated at a pressure of 200 MPa using the wet-type jet mill. After transferring the obtained solution to a storage tank 22, 100 g of carbon short fibers (Donacarbo Chop S-232, manufactured by Osaka Gas Co., Ltd.) as a structure was added, and the resulting mixture was stirred.

This solution mixed with carbon short fibers was introduced as a dispersion liquid into a coating device. As a dispersion liquid transfer means 390, a liquid feeding pump was used, and a slit die was used for the dispersion liquid supply unit 30 and the head box 31. For the slit die, a slit having a length of 10 cm and a width of 5 mm was used. The discharge amount was 5 ml/sec.

A punch sheet 323 made of stainless steel was used and this punch sheet was driven by two rotating rollers. The width of the punch sheet was 30 cm. Holes with a diameter of 5 mmcp were present at intervals of 1 cm, the distance between the centers of the rotating rollers was 1 m, and the traveling speed of the punch sheet 323 was 1 cm/sec. The traveling speed of the rotating rollers is controlled by a drive control device (not shown). The liquid feeding pump stopped the liquid delivery for 5 seconds every 10 seconds of discharge and formed a non-coated portion between the obtained carbon nanotube composite sheets.

As the base sheet, a nonwoven fabric made of polyphenylene sulfide (manufactured by Maedakosen Co., Ltd., basis weight: 60 g/m² grade, average fiber diameter: 25 µm, width: 15 cm) was used. The base sheet was sandwiched between the rotating roller 312a of the punch sheet 323 and a rotating roller (not shown), and was fed at the same speed as that of the punch sheet 323.

A suction portion 325 for sucking the dispersion liquid was provided at a position 20 cm below the position of the slit die. Using a pump, the suction portion sucked in a range of 150 cm in width and 20 cm in length at 0.01 kgf/cm² to obtain a wet CNT composite sheet.

The obtained wet CNT composite sheet was subjected to the following dehydration step. Five rotating rollers 331 were arranged at substantially equal intervals on both the upper and lower sides. A water-absorbing nonwoven fabric was used as the dehydration belts 332a and 332b. With the exception of the most upstream rotating roller, the temperature was regulated at 80°C, and the dispersion medium absorbed by the water-absorbing nonwoven fabric was dehydrated. Five squeeze rollers 334 were each arranged on the upper and lower sides, and squeezed at 5 MPa, 5 MPa, 10 MPa, 20 MPa, and 20 MPa in this order from the upstream side. In this manner, a dehydrated CNT sheet 65 was obtained.

The dehydrated CNT sheet 65 thus obtained was again pressed at 20 MPa by a press roller 511 and sent to a cutting unit. In the cutting unit, the cutting blade was moved up and down so as to cut only the portion of the base sheet where the CNT sheet portion had not been formed, thereby obtaining a CNT composite sheet in which a 10 cm square CNT sheet portion had been formed. This sheet was dried with a hot air dryer at 80°C for 3 hours by using a dedicated drying jig made of stainless steel which was capable of mounting the sheet one by one, thereby obtaining a finished CNT composite sheet. The thickness of the dried CNT sheet portion was 5 mm and the total mass per 210 mm in the widthwise direction × 300 mm in the lengthwise direction was 56 g.

The finished CNT composite sheet thus obtained was cut into a size of 50 mm × 50 mm and used as an electrode of a redox flow battery. FIG. 8 is a transmission electron micrograph of the obtained electrode material. The electrode material has a structure in which the second carbon nanotube 82 adheres to and entangles with the surface of the first carbon nanotube 81 and the second carbon nanotube 82 straddles between the plurality of first carbon nanotubes 81. As a result of observing a total of 100 second carbon nanotubes when observing the electrode material with a transmission electron microscope, a structure was found in which 72 second carbon nanotubes 82 straddled between the plurality of first carbon nanotubes 81.

Using the obtained electrodes as a cathode and an anode one by one, a redox flow battery was assembled and the output was tested. An aqueous solution of divalent vanadium ions (V²⁺) was introduced to the anode side and an aqueous solution of pentavalent vanadium ions (V⁵⁺) was introduced to the cathode side, and the respective aqueous solutions were circulated by a tube pump. Note that these vanadium ion aqueous solutions contain sulfuric acid having a concentration of 4.5 M. As a diaphragm between both electrodes, a Nafion (registered trademark) membrane was used.

In the redox flow battery, the concentration of vanadium ions in the solution was 1.5 M and the total amount of the solution used was 50 ml. Therefore, the theoretical capacity is 7,200 coulombs.

A constant current discharge of 1 A was performed with the redox flow battery. When the potential difference between the cathode and the anode was the electromotive force and the time point at which the electromotive force reached 1.0 V was defined as the end point, the amount of electricity passed through, starting from 1.7 V up to 1.0 V and shifting at an average of about 1.2 V, was 7,000 coulombs. The discharge time was 117 minutes.

The discharged redox flow battery was charged at a constant current of 1 A, and then it was switched to the constant voltage charge when the potential difference between the cathode and the anode reached 1.6 V. The charging capacity at that time was 7,200 coulombs.

Although the electrode material of the redox flow battery has been described above as an example, the composite CNT sheet manufactured by the manufacturing method according to one embodiment of the present invention can be applied within the range that utilizes its characteristics, and can be used for various devices such as batteries, carriers of predetermined materials (catalysts, proteins, carbon dioxide and the like), electromagnetic wave shields, electrochemical sensors, biosensors and the like. Examples of the battery include a fuel cell (for example, a magnesium fuel cell, a microbial fuel cell, a solid polymer-type fuel cell, a direct oxidation-type fuel cell, a glucose fuel cell, a methanol type fuel cell), a secondary battery (for example, a magnesium battery, a lithium battery, a metal air battery, an alkali metal-sulfur secondary battery, or the like), a storage battery, and the like. Further, among the batteries, various applications such as an electrode, a gas diffusion layer and the like are conceivable.

### [Reference Signs List]

2: Dispersion liquid production unit; 21: Mixing tank; 22: Storage tank; 23: Stirring device; 3: Coating unit; 30: Dispersion liquid supply unit; 31: Head box; 311: Head box main body, 311a: Storage unit; 311b: Supply unit; 314: Slit; 315: Transverse wall member; 31a: Transverse wall member, 318: Vibration exciter; 32: Punch sheet unit; 323: Punch sheet; 323a: Outward track; 323b: Return track; 321, 321a, 321b: Rotating roller (coating device); 324a, 324b: One side surface of base sheet; 325: Suction portion; 325a: Upstream side opening portion; 325b: Downstream side opening portion; 301: Dispersion liquid; 35: Base sheet feeder; S: Coating device; 4: Dehydration unit; 5: Finishing unit; 331: Rotating roller (dehydration device); 64: Wet CNT composite sheet; 65: Dehydrated CNT composite sheet; 66: Finished CNT composite sheet; 81: First carbon nanotube; 82: Second carbon nanotube; 302: CNT sheet portion; 324: Base sheet; V: Dehydration device

## Claims

1. A device for manufacturing a carbon nanotube composite sheet, comprising:
a dispersion liquid production unit which produces a carbon nanotube dispersion liquid;
a coating unit which coats said dispersion liquid;
a dehydration unit which dehydrates the coated dispersion liquid; and
a finishing unit which cuts a dehydrated sheet obtained in said dehydration unit,
wherein said dispersion liquid production unit comprises a mixing tank provided with a wet-type jet mill,
said coating unit comprises a coating device provided with a base unit and a dispersion liquid supply unit which supplies the dispersion liquid produced by the dispersion liquid production unit to said base unit, and
said dehydration unit is provided with a compression unit which compresses a wet carbon nanotube composite sheet obtained in said coating unit, and a dehydration device which dehydrates the compressed wet carbon nanotube composite sheet.

2. The device for manufacturing a carbon nanotube composite sheet according to Claim 1,
wherein in said coating device, said base unit is a base sheet extending in one direction,
said base sheet is transportable in an extending direction, and
said dispersion liquid is continuously coatable on one surface of said base sheet.

3. The device for manufacturing a carbon nanotube composite sheet according to Claim 2,
wherein said dispersion liquid supply unit intermittently supplies said dispersion liquid, so that a region coated with the dispersion liquid and a region not coated with the dispersion liquid are alternately formed on one surface of said base sheet.

4. A method for manufacturing a carbon nanotube composite sheet, wherein the method uses the device for manufacturing a carbon nanotube composite sheet according to any one of Claims 1 to 3.

5. The method for manufacturing a carbon nanotube composite sheet according to Claim 4, comprising a step of producing a carbon nanotube dispersion liquid, which contains a first carbon nanotube having an average diameter of 100 nm or more and a second carbon nanotube having an average diameter of 30 nm or less, in the dispersion liquid production unit of said device for manufacturing a carbon nanotube composite sheet.

6. The method for manufacturing a carbon nanotube composite sheet according to either Claim 4 or 5, comprising: coating the dispersion liquid continuously on said base unit in the coating unit of said device for manufacturing a carbon nanotube composite sheet.

7. The method for manufacturing a carbon nanotube composite sheet according to any one of Claims 4 to 6, comprising:
forming a region coated with the dispersion liquid and a region not coated with the dispersion liquid alternately on one surface of said base unit in the coating unit of said device for manufacturing a carbon nanotube composite sheet, and
cutting said base sheet according to the region not coated with said dispersion liquid.
